# EUROPÄISCHE PATENTSCHRIFT

(11) **EP 0 872 280 B1**
(45) Veröffentlichungstag und Bekanntmachung des Hinweises auf die Patenterteilung: **03.09.2003**
(21) Anmeldenummer: 98102271.8
(22) Anmeldetag: 10.02.1998
(51) Int. Cl.: B02C 4/30

(54) **Verschleissfeste Oberflächenpanzerung für die Walzen von Walzenmühlen zur Druckzerkleinerung körnigen Gutes**
Wear-resistant surface coating for rollers of roller mills for pressure milling of granular material
Revêtement résistant à l'usure pour cylindres de broyeurs à cylindres pour le broyage sous pression de matériau granulaire

(30) Priorität: 22.02.1997 DE 19707130
(43) Veröffentlichungstag der Anmeldung: 21.10.1998
(73) Patentinhaber: KHD Humboldt-Wedag AG, 51103 Köln (DE)
(72) Erfinder: Sommer, Erich, 51109 Köln (DE); Wollner, Michael, Dr., 51674 Wiehl (DE)

(56) Entgegenhaltungen:
- EP-A- 0 516 952
- EP-A- 0 578 239
- EP-A- 0 634 217
- EP-A- 0 699 479

## Beschreibung

Die Erfindung betrifft eine Mahlwalze für die Druckzerkleinerung körnigen Gutes, insbesondere von Rollenpressen zur Gutbettzerkleinerung, mit einer Vielzahl von in entsprechende Ausnehmungen des Walzenkörpers eingelagerten aus hartem Werkstoff bestehenden Noppen, die mit Abstand voneinander aus dem Walzenkörper herausragen und zwischen sich Taschen zur Aufnahme von zusammengepresstem feinkörnigen Gut bilden.

Bei Walzenmühlen wird sprödes Mahlgut in den Walzenspalt, durch den die beiden drehbar gelagerten gegenläufig rotierbaren Walzen voneinander getrennt sind, eingezogen und dort einer Druckzerkleinerung unterworfen. Bekannt ist auch die sogenannte Gutbettzerkleinerung im Walzenspalt einer Hochdruck-Walzenmühle bzw. Walzenpresse, bei der die einzelnen Partikel des durch Reibung in den Walzenspalt eingezogenen Mahlgutes in einem Gutbett, d. h. in einer zwischen den beiden Walzenoberflächen zusammengedrückten Materialschüttung bei Anwendung eines hohen Druckes gegenseitig zerquetscht werden. Es versteht sich, dass dabei die Walzenoberflächen einer außerordentlichen hohen Beanspruchung und einem hohen Verschleiß ausgesetzt sind.

Es ist daher bekannt (EP-A-0 516 952), die Walzenoberflächen von Gutbettzerkleinerungs-Walzenmühlen bzw. Rollenpressen dadurch verschleißfester zu machen, indem in entsprechende Ausnehmungen wie Sackloch-Bohrungen des Walzenkörpers eine Vielzahl vorgefertigter harter Profilkörper wie stiftförmige Noppenbolzen eingelagert, z. B. eingepresst wird. Dabei sollen die stiftförmigen Noppenbolzen mit einer so großen Höhe nach außen von der Walzenoberfläche vorstehen und mit einem solchen Abstand voneinander angeordnet sein, dass im Betrieb der Walzenmühle auf der Walzenoberfläche die Zwischenräume bzw. Taschen zwischen den stiftförmigen Noppenbolzen mit dem zusammengepressten feinkörnigen Gutmaterial ausgefüllt bleiben, welches einen sogenannten autogenen Verschleißschutz für die Walzenoberflächen bildet.

Die Einlagerung bzw. das Einpressen vorgefertigter Noppenbolzen in entsprechende Sackloch-Bohrungen des Walzenkörpers ist infolge der spangebenden Bearbeitung fertigungstechnisch verhältnismäßig aufwendig, weil sowohl beim Sackloch-Durchmesser als auch beim Bolzendurchmesser enge Toleranzen eingehalten werden müssen. Enge Fertigungstoleranzen sind insbesondere auch dann einzuhalten, wenn zwecks Reduzierung des Einflusses von Kerbspannungen die radial inneren (unteren) Enden der Noppenbolzen halbkugelförmig bzw. kalottenförmig ausgebildet sind, mit denen sich die Bolzen an entsprechend halbkugelförmig geformten Sacklochenden der im Walzenkörper angebrachten Ausnehmungen abstützen, wie in der EP-A-0 578 239 vorgeschlagen wird.

Zur Oberflächenpanzerung für die Walzen von Hochdruck-Walzenmühlen bzw. Walzenpressen ist es auch bekannt (EP-A-0 634 217), statt Verwendung vorgefertigter Noppenbolzen die Noppenbolzen dadurch zu erzeugen, dass sie unter Zuhilfenahme einer Kokille formgeschweißt werden. Zur Herstellung dieser bekannten Oberflächenpanzerung wird auf die Walzenoberfläche eine an deren Kontur angepasste, mit einer Wasserkühlung in Verbindung stehende Kokille aufgelegt, die mit radialen Durchgangsöffnungen (Durchgangsbohrungen) versehen ist, die dann mit Auftrags-Schweißmaterial ausgefüllt werden, wonach nach Erstarrung des Schweißmaterials die Kokille von der Walzenoberfläche abgehoben wird. Bei dieser bekannten Oberflächenpanzerung kann der Übergang von der Noppe zum Walzenkörper eine Problemzone darstellen, denn die durch Formschweißung hergestellten Noppen sind auf die Walzenoberfläche schweißtechnisch gesehen mehr oder weniger nur "aufgeklebt".

Der Erfindung liegt die Aufgabe zugrunde, für die Druckzerkleinerung bzw. Gutbettzerkleinerung körnigen Gutes im Walzenspalt von Hochdruck-Rollenpressen bzw. Walzenpressen verschleißfeste Mahlwalzen mit einer für den autogenen Verschleißschutz unter Anwendung der Noppenbolzen-Rasterpanzerungstechnik geeignete Oberflächenpanzerung zu schaffen, die ein hohes Standzeitvermögen aufweist und die doch einfach, schnell und insgesamt kostengünstig zu fertigen und sogar vom Betreiber bzw. Kunden zu regenerieren/reparieren ist.

Diese Aufgabe wird gemäß der Erfindung mit einer Mahlwalze mit den Merkmalen des Anspruchs 1 gelöst. Eine vorteilhafte Ausgestaltung ist im Unteranspruch angegeben.

Bei der erfindungsgemäßen Oberflächenpanzerung für die Walzen von Walzenmühlen zur Druckzerkleinerung körnigen Gutes mit Anwendung der Technik des autogenen Verschleißschutzes mittels Rasterpanzerung sind die durch Schweißung erzeugten Noppen nicht mehr oder weniger auf die Walzenoberfläche schweißtechnisch "aufgeklebt", sondern sie sind, obwohl durch Formschweißung hervorgegangen, igelförmig in Ausnehmungen z. B. Bohrungen des Walzenkörpers durch Einschweißung eingelagert und damit letztendlich formschlüssig mit dem Walzenkörper verbunden, d. h., dass auf diese Weise die Verklammerung zwischen der Noppe und dem Walzenkörper durch den Formschluss wesentlich erhöht ist, insbesondere wenn der Werkstoff des in die Walzenkörperbohrung eingeschweißten radial inneren (unteren) Noppen-Materialteils gut mit dem Walzenkörper verschweißbar ist. Der radial äußere (obere) Noppen-Materialteil, der durch Formschweißung erzeugt wird, besteht aus einem härteren Legierungswerkstoff, um die Verschleißfestigkeit der Noppen selbst zu erhöhen.

Weil bei der erfindungsgemäßen Mahlwalze der jeweils radial innere Materialteil der Noppen durch Formschweißung in die Ausnehmungen des Walzenkörpers eingeschweißt wird, sind zum Aufbau dieses Noppenteils eine vorherige besondere Bearbeitung der Ausnehmungen sowie die Anwendung einer Schablone oder Kokille nicht erforderlich, d. h. Sacklochbohrungen, die kostenaufwändig spangebend unter Einhaltung relativ enger Toleranzen erzeugt werden müssten, sind vermieden.

Die Erfindung und deren weitere Merkmale und Vorteile werden anhand der in den Figuren schematisch dargestellten Ausführungsbeispiele näher erläutert.

Es zeigt:
- Fig. 1:: eine durch Formschweißung aufgebaute EinstoffSchweißnoppe, die formschlüssig in eine Ausnehmung des Walzenkörpers einer Walzenmühle zwecks deren Oberflächenpanzerung eingelagert ist;
- Fig. 2:: als Variante zur Ausführungsform der Fig. 1 eine durch Formschweißung hergestellte Zweistoff-Noppe, und
- Fig. 3:: die Anwendung einer Schablone bei der Formschweißung des radial äußeren (oberen) Noppenteils.

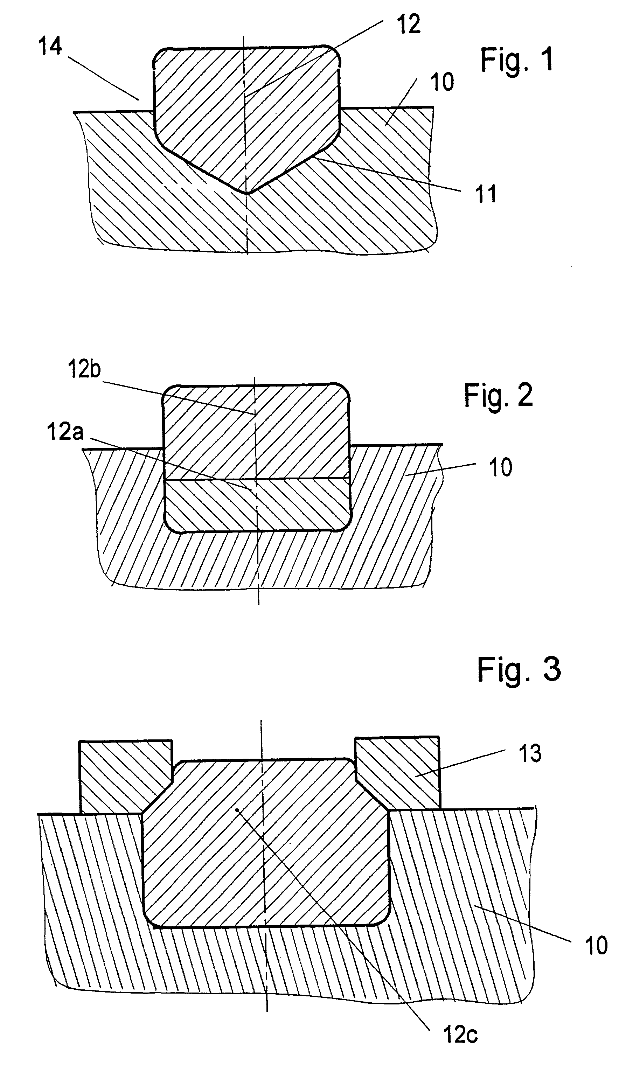

Fig. 1 zeigt schematisch im Ausschnitt die Oberseite des Mantels einer Mahlwalze, die mit einer Oberflächenpanzerung versehen wird. Dazu wird in den Walzenkörper 10 eine Ausnehmung z. B. ein Sackloch 11 eingebracht. In den Walzenkörper 10 wird formschlüssig ein Noppen 12 eingelagert, und zwar durch Auftragsschweißung von harten metallischen Werkstoffen in die Walzenkörper-Ausnehmung 11 sowie darauf aufgebaut durch Formschweißung. Der Noppen 12 ist also sozusagen ein "versenkter Schweißnoppen". Durch den Formschluss und die Schweißung ergibt sich eine sehr starke Verklammerung zwischen Noppen 12 und Walzenkörper 10.

Beim Ausführungsbeispiel der Fig. 2 ist zu sehen, daß der durch Formschweißung aufgebaute Noppen aus einem radial inneren mit dem Walzenkörper 10 gut verschweißbaren Materialteil 12a und aus einem radial äußeren härteren Materialteil 12b bestehen kann. Dabei können die Legierungswerkstoffe der Noppen-Schweißung wenigstens in den radial äußeren Bereichen 12b eine Härte von mehr als 50 HRC (Härteprüfung nach Rockwell C) aufweisen.

Aus dem Beispiel einer Noppe der Fig. 3 geht hervor, dass die Formschweißung der Schweißnoppe 12c mit Hilfe einer den Noppendurchmesser oberhalb der Walzenoberfläche bestimmenden Schablone 13 bzw. Kokille durchgeführt wird. Dabei kann der Durchmesser des von der Walzenoberfläche nach außen hervorragenden Noppenteils gleich oder kleiner (Fig. 3) sein als der Durchmesser des in die Walzenkörperbohrung eingeschweißten radial inneren Noppenteils. Ist der Durchmesser des radial äußeren Noppenteils , wie im Gegenstand der vorliegenden Erfindung größer als der radial innere Noppenteil, erhält der Noppen sozusagen einen verbreiterten Pilzkopf, wodurch die Verklammerung zwischen dem Noppen und dem Walzenkörper 10 noch erhöht ist.

Die Höhe der von der Walzenoberfläche radial nach außen vorstehenden Teile der Schweißnoppen 12 wird nach Art des von der Walzenmühle zu behandelnden Gutes gewählt und kann z. B. bis zu 10 mm betragen. Benachbarte Schweißnoppen 12 sind in einem Abstand voneinander von etwa kleiner 40 mm angeordnet, so dass die zwischen den Noppen 12 auf der Walzenoberfläche gebildeten Zwischenräume bzw. Taschen 14 im Bereich der Walzenoberfläche so eng sind, daß im Gutbettzerkleinerungs-Betrieb der Walzenmühle diese Taschen 14 zwischen den Noppen mit ein und demselben zusammengepreßten und durch Gutbettzerkleinerung hervorgegangenen feinkörnigen, aber hochverdichteten Gut ausgefüllt sind, welches während der Walzenumdrehungen in diesen Taschen haften bleibt, d. h. das in die Zwischenräume bzw. Taschen 14 zwischen die Schweißnoppen 12 von außen hineingepreßte und dort mit Sicherheit verbleibende Gutmaterial bildet einen idealen autogenen Verschleißschutz.

Die erfindungsgemäße Oberflächenpanzerung ist durch eine hohe Standzeit gekennzeichnet. Sollten Teilausbrüche der Panzerung auftreten, können diese an den lokalen Stellen einfach wieder durch Schweißnoppen-Formschweißung regeneriert/repariert werden, wobei neue Nut- bzw. Bohrungsarbeiten am Walzenkörper in der Regel nicht mehr erforderlich sind.

## Patentansprüche

1. Mahlwalze für die Druckzerkleinerung körnigen Gutes, insbesondere von Rollenpressen zur Gutbettzerkleinerung, mit einer Vielzahl von in entsprechende Ausnehmungen (11) des Walzenkörpers (10) eingelagerten aus hartem Werkstoff bestehenden Noppen (12), die mit Abstand voneinander aus dem Walzenkörper (10) herausragen und zwischen sich Taschen (14) zur Aufnahme von zusammengepresstem feinkörnigen Gut bilden,
**dadurch gekennzeichnet, dass** die Noppen (12) nicht aus vorgefertigten harten Profilkörpern bestehen, sondern durch Formschweißung erzeugt sind, nämlich durch
a) Einschweißung bzw. Auftragsschweißung eines radial inneren Materialteils (12a) in die entsprechenden Ausnehmungen (11) des Walzenkörpers (10), und darauf aufbauend durch
b) Formschweißung eines radial äußeren Materialteils (12b) auf den radial inneren Materialteil (12a) mit Hilfe einer den Noppendurchmesser oberhalb der Walzenkörperoberfläche bestimmenden Schablone (13), wobei
c) der Durchmesser des von der Walzenkörperoberfläche nach außen hervorragenden Noppenteils größer ist als der Durchmesser des radial inneren Noppen-Materialteils, und
d) die Härte des radial äußeren Noppen-Materialteils (12b) größer ist als die Härte des radial inneren Noppen-Materialteils (12a).

2. Mahlwalze nach Anspruch 1,
**dadurch gekennzeichnet, dass** die Schweißlegierungswerkstoffe des radial äußeren Noppen-Materialteils (12b) eine Härte von mehr als 50 HRC (Härteprüfung nach Rockwell C) aufweisen.

## Claims

1. Grinding roll for the pressure comminution of granular material, in particular of roller presses for material-bed comminution, having a multiplicity of studs (12) which are embedded in corresponding recesses (11) of the roll body (10), are made of a hard material, project from the roll body (10) at a distance from one another and form pockets (14) between them for compressed fine-grained material, **characterized in that** the studs (12) do not consist of prefabricated hard profile bodies but are produced by form welding, namely by
a) welding or surface welding a radially inner material part (12a) in place in the corresponding recesses (11) of the roll body (10), and, building up thereon, by
b) form welding a radially outer material part (12b) onto the radially inner material part (12a) by means of a template (13) determining the stud diameter above the surface of the roll body,
c) the diameter of the stud part which projects outwards from the surface of the roll body being greater than the diameter of the radially inner stud material part, and
d) the hardness of the radially outer stud material part (12b) being greater than the hardness of the radially inner stud material part (12a).

2. Grinding roll according to Claim 1, **characterized in that** the welding alloy materials of the radially outer stud material part (12b) have a hardness of more than 50 HRC (hardness test according to Rockwell C).

## Revendications

1. Cylindre de broyage pour le fractionnement sous pression de matières granuleuses, en particulier de presses à rouleaux pour le fractionnement de matières en lit, avec une pluralité de bosses (12) constituées d'un matériau dur, qui sont serties à distance les unes des autres dans des évidements (11) correspondants du corps cylindrique (10), qui débordent du corps cylindrique (10) et qui forment entre elles des poches (14) de reprise de la matière finement granuleuse comprimée,
**caractérisé en ce que** les bosses (12) ne sont pas constituées de corps profilés durs préfabriqués mais sont créés par soudage-façonnage, à savoir :
a) soudage ou soudage d'apport d'une partie (12a) de matériau située radialement à l'intérieur dans les évidements (11) correspondants du corps cylindrique (10), et à partir de là
b) soudage-façonnage d'une partie (12b) de matériau située radialement à l'extérieur sur la partie (12a) de matériau située radialement à l'intérieur, à l'aide d'un gabarit (13) qui détermine le diamètre de la bosse au-dessus de la surface du corps cylindrique,
c) le diamètre de la partie de la bosse qui déborde à l'extérieur de la surface du corps cylindrique étant plus grand que le diamètre de la partie du matériau de la bosse située radialement à l'intérieur et
d) la dureté de la partie (12b) de matériau de la bosse située radialement à l'extérieur est supérieure à la dureté de la partie (12a) de matériau de la bosse située radialement à l'intérieur.

2. Cylindre de broyage selon la revendication 1.
**caractérisé en ce que** les matériaux d'alliage de soudage de la partie (12b) de matériau de la bosse située radialement à l'extérieur ont une dureté supérieure à 50 HRC (essai de dureté selon Rockwell C).
